# EUROPEAN PATENT APPLICATION

(11) **EP 1 853 023 A1**
(43) Date of publication of application: **07.11.2007**
(21) Application number: 06026604.6
(22) Date of filing: 21.12.2006
(51) Int. Cl.: H04L 29/06

(54) **Intermediate network node supporting packet analysis of encrypted payload**

(30) Priority: 05.05.2006 US 429477; 05.05.2006 US 429478; 23.06.2006 US 474033
(71) Applicant: Broadcom Corporation, Irvine, CA 92617 (US)
(72) Inventor: Bennett, James, D., 92672 San Clemente CA (US)
(74) Representative: Jehle, Volker Armin

(57) **Abstract**

An Internet infrastructure with network nodes (access points/routers/switches) and end point devices containing encryption, decryption pipes and encryption/decryption manager analyzes encrypted packets and applies service modules when required. The network node includes processing circuitry, encryption pipe circuitry, decryption pipe circuitry, storage, an encryption/decryption manager and optionally, a proxy flow manager and a cache. The encryption/decryption manager decrypts each of the encrypted packets using the decryption pipe circuitry, to generate decrypted packets. The processing circuitry processes the decrypted packets by applying service functionality, to generate processed packets. Finally, the encryption/decryption manager encrypts the processed packets using the encryption pipe circuitry, to generate re-encrypted packets. These processed and encrypted packets are routed toward destination end point device. The proxy flow manager may store each packet of an encrypted file until the last packet is arrived, allowing analysis and service module vectoring of encrypted files.

## Description

### CROSS REFERENCES TO RELATED APPLICATIONS

This application is a continuation-in-part of the following co-pending applications:

1. Utility Application Serial No. 11/429,477, filed on May 5, 2006, and entitled "PACKET ROUTING WITH PAYLOAD ANALYSIS, ENCAPSULATION AND SERVICE MODULE VECTORING"; and

2. Utility Application Serial No. 11/429,478, filed on May 5, 2006, and entitled "PACKET ROUTING AND VECTORING BASED ON PAYLOAD COMPARISON WITH SPATIALLY RELATED TEMPLATES", the disclosures of both of these incorporated herein by reference in their entirety for all purposes.

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

**1. Field of the Invention**

This invention generally relates to communication infrastructures, and, more particularly, to routing and switching node operations in a packet switched communication network.

**2. Related Art**

Internet use for communication of secured audio, video, data packets has become widespread and cryptology of various kinds are used in Internet communication for information security. Internet infrastructure typically includes network nodes such as routers, switches, packet switched exchanges, access points and Internet service provider's networks (ISPN), Internet communication pathways and end point devices. The end point devices include personal or laptop computers, servers, set top boxes, handheld data/communication devices and other client devices, for example. All these end point devices residing in remote locations exchange secured audio, video and data packets using cryptography.

Conventional end point devices have the burden of restraining presentation or execution of disruptive, unauthorized, unwanted, and unsuitable content. Often, however, such end point devices are incapable of doing so. For example, even with malware protection software active, end point devices are often infected. With blocking software installed, pornography is still displayed to children. Other types of filters blocking such types of content also fail with undesirable results. Although the network nodes may perform analysis and processing of disruptive, unauthorized, unwanted and unsuitable content in the Internet infrastructure, the network nodes may fail to perform such analysis and processing of packets that are encrypted using any of the cryptography available.

Further limitations and disadvantages of conventional and traditional approaches will become apparent to one of ordinary skill in the art through comparison of such systems with the present invention.

### BRIEF SUMMARY OF THE INVENTION

The present invention is directed to apparatus and methods of operation that are further described in the following Brief Description of the Drawings, the Detailed Description of the Invention, and the Claims.

In accordance with the present invention, an Internet infrastructure with network nodes and end point devices containing encryption, decryption pipes and encryption/decryption manager, so that encrypted packets may be analyzed and service modules may be applied, if indicated. The network nodes may be an access point, router or a switch.

In accordance with the present invention, a network node in an Internet infrastructure that receives a plurality of packets of an encrypted file from a source end point device, destined to a destination end point device. The network node consists of decryption pipe circuitry, encryption pipe circuitry, processing circuitry communicatively coupled to both the encryption pipe circuitry and the decryption pipe circuitry and storage, communicatively coupled to the processing circuitry, comprising encryption/decryption manager, proxy flow manager and a cache. The proxy flow manager stores each packet of the encrypted file until the last packet is arrived. The encryption/decryption manager decrypts the encrypted file using the decryption pipe circuitry, to generate a decrypted file. The processing circuitry processes the decrypted file by applying service functionality, to generate a processed file. Finally, the encryption/decryption manager encrypts the processed file using the encryption pipe circuitry, to generate a second encrypted file.

In accordance with the present invention, a packet switching exchange in an Internet infrastructure that participates in a communication pathway, the communication pathway supporting delivery of encrypted packets from a source end point device to a destination end point device. The packet switching exchange consists of a plurality of switches and network interfaces, decryption pipe circuitry, encryption pipe circuitry, processing circuitry communicatively coupled to both the encryption pipe circuitry and the decryption pipe circuitry and encryption/decryption manager residing in storage. The encryption/decryption manager decrypts encrypted packets using the decryption pipe circuitry, to generate a decrypted packet. Then, the processing circuitry processes the decrypted packet by selectively vectoring the decrypted packet out of the communication pathway for application of service functionality, to generate a processed packet. Finally, the encryption/decryption manager encrypts the processed packet using the encryption pipe circuitry, to generate a second encrypted packet.
According to an aspect of the invention, a packet switching exchange in an Internet infrastructure is provided that participates in a communication pathway, the communication pathway supporting delivery of a first encrypted packet from a source end point device toward a destination end point device, the packet switching exchange comprising:
processing circuitry comprising a decryption pipe and an encryption pipe;
a plurality of network interfaces communicatively coupled to the processing circuitry;
a first of the plurality of network interfaces, upon receipt of the first encrypted packet from the source end point device, delivers the first encrypted packet to the processing circuitry;
the processing circuitry decrypts the first encrypted packet using the decryption pipe to generate a first decrypted packet;
the processing circuitry compares the first decrypted packet with at least one trigger template;
the processing circuitry encrypts the first decrypted packet using the encryption pipe circuitry to generate a second encrypted packet; and
the processing circuitry delivers the second encrypted packet toward the destination end point device via a second of the plurality of network interfaces.
Advantageously, the packet switching exchange comprising a router.
Advantageously, the packet switching exchange comprising an access point.
Advantageously, the decryption pipe uses a first key.
Advantageously, encryption pipe uses a second key.
Advantageously, the first key is a private key associated with the decryption pipe.
Advantageously, the second key is a public key associated with the destination end point device.
Advantageously, the second encrypted packet includes a processed tag.
According to an aspect of the invention, a communication infrastructure comprises:
an intermediate network node;
a destination device communicatively coupled to the intermediate network node;
a source device, communicatively coupled to the intermediate node, that employs a first public key to generate a first packet having a first encrypted payload, and the first packet contains a network address of the destination device;
the intermediate network node receives the first packet and uses a first private key to generate a first decrypted payload from the first encrypted payload;
the intermediate network node performs a processing function on the first decrypted payload;
the intermediate network node employs a second public key to generate a second packet having a second encrypted payload; and
the destination device receives the second packet and uses a second private key to generate a second decrypted payload from the second encrypted payload.
Advantageously, the destination device communicates the first public key to the source device.
Advantageously, the intermediate network node communicates the first public key to the source device.
Advantageously, the source device directs the first packet to the intermediate network node.
According to an aspect of the invention, a network node is provided in an Internet infrastructure that receives a first plurality of packets representing at least a portion of a first encrypted file from a source end point device, destined to a destination end point device, the network node comprising:
interface circuitry that receives the plurality of packets;
storage;
processing circuitry, communicatively coupled to the interface circuitry, that directs the first plurality of packets received via the interface circuitry to the storage;
the processing circuitry reconstructs the at least a portion of the first encrypted file from the first plurality of packets, and decrypts the at least a portion of the first encrypted file to generate a decrypted sequence;
the processing circuitry processes the decrypted sequence by applying service functionality; and
the processing circuitry encrypts the decrypted sequence to create an encrypted sequence; and
the processing circuitry constructs a second plurality of packets from the encrypted sequence, and forwards the second plurality of packets toward the destination end point device.
Advantageously, the network node comprising a router.
Advantageously, the network node comprising an access point.
Advantageously, the processing circuitry performs the decryption using a private key, and performs the encryption using a public key.
According to an aspect of the invention, a method performed by a packet switching exchange in a packet switched communication pathway is provided, the method comprising:
receiving a first packet with a first encrypted payload from a source end point device;
performing decryption processing on the first encrypted payload using a private key to generate a first decrypted payload;
performing an analysis of the first decrypted payload;
perform encryption processing on the first decrypted payload using a public key to generate a second encrypted payload;
constructing a second packet with the second encrypted payload; and
transmitting the second packet toward the destination end point device.
Advantageously, the public key is associated with the destination end point device.
Advantageously, the first encrypted payload was generated by the source end point device using an additional public key, and the additional public key is associated with the packet switching exchange.

Features and advantages of the present invention will become apparent from the following detailed description of the invention made with reference to the accompanying drawings.

### BRIEF DESCRIPTION OF THE DRAWINGS

**FIG. 1A** and **1B** are schematic block diagrams of a communication infrastructure illustrating an intermediate network node that receives packets exchanged between source and destination end point devices, and wherein the intermediate network node participates in the encryption process to support packet content analysis of encrypted packet payloads;

**FIG. 2** is a schematic block diagram illustrating a network node (switch/router/ISPN/AP) constructed in accordance with the embodiment of **FIG. 1A** of the present invention;

**FIG. 3** is a schematic block diagram illustrating a packet switching exchange constructed in accordance with the embodiment **of FIG. 1A** of the present invention;

**FIG. 4** is a schematic block diagram illustrating end point devices (servers and/or clients) constructed in accordance with the embodiment of **FIG. 1A** of the present invention;

**FIG. 5** is a schematic block diagram illustrating an access point constructed in accordance with the embodiment of **FIG. 1A** of the present invention;

**FIG. 6A** is a schematic diagram illustrating an embodiment of the present invention in which an encrypted file is packetized and transmitted across the Internet backbone, where network nodes support packet analysis of the encrypted file;

**FIG. 6B** is a schematic block diagram illustrating a source/destination end point device (server and/or client) constructed in accordance with the embodiment of **FIG. 6A** of the present invention;

**FIG. 7** is a schematic diagram illustrating another embodiment of the present invention in which a proxy server is built into the network node to support packet analysis of an encrypted file;

**FIG. 8** is a schematic block diagram illustrating a network node (switch/router/ISPN/AP) constructed in accordance with the embodiments of **FIG. 6A** and **7** of the present invention;

FIG. 9 is a flowchart illustrating general flow of functionality of network node of **FIGs. 1B, 2, 3, 4** and **5;**

**FIG. 10** is a flowchart illustrating detailed flow of functionality of network node of **FIGs. 1B, 2, 3, 4** and **5;** and

**FIG. 11** is a flowchart illustrating general flow of functionality of network node of FIG. 8.

### DETAILED DESCRIPTION OF THE INVENTION

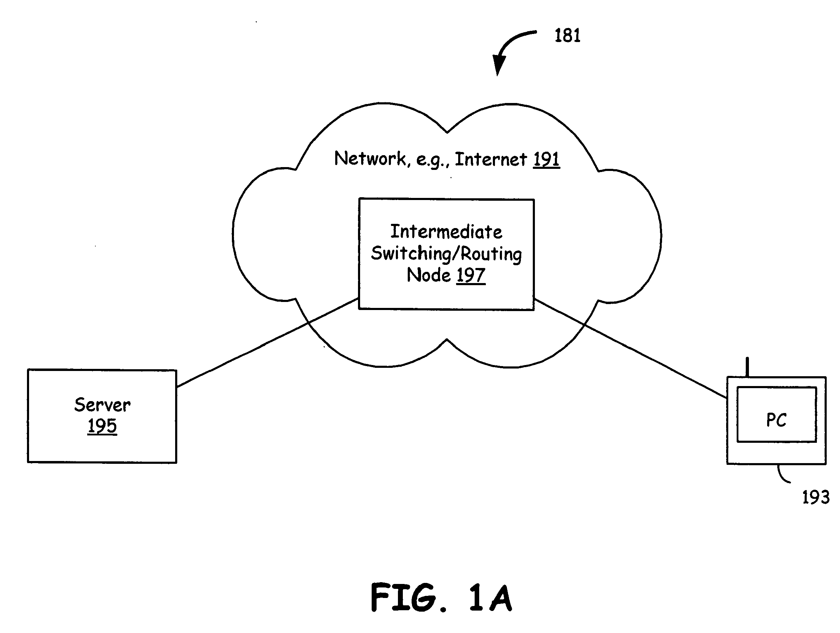

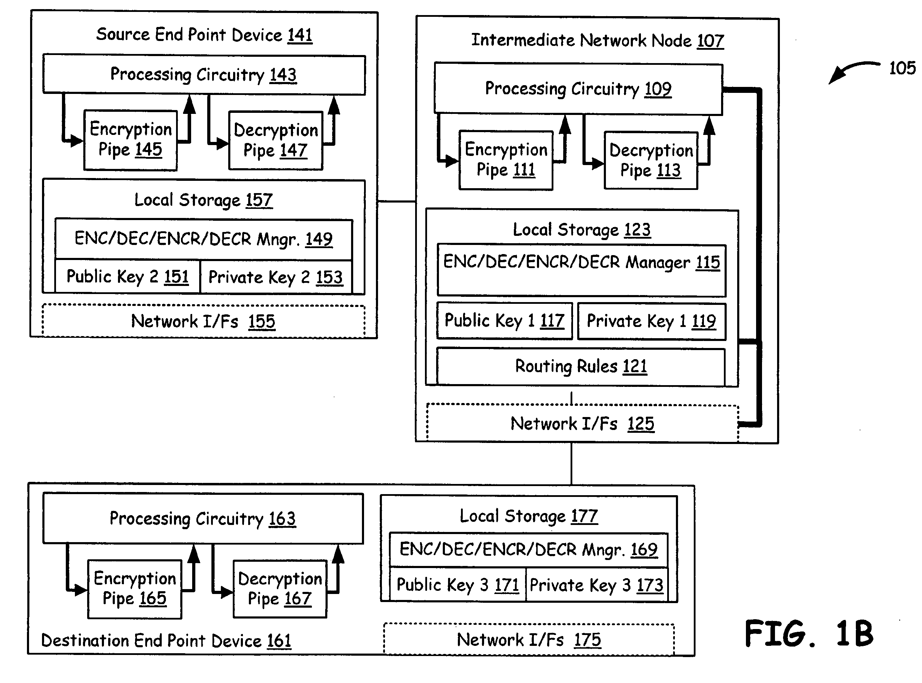

**FIG. 1A** and **1B** are schematic block diagrams of a communication infrastructure illustrating an intermediate network node that receives packets exchanged between source and destination end point devices, and wherein the intermediate network node participates in the encryption process to support packet content analysis of encrypted packet payloads. More particularly, in a communication infrastructure 181 of **FIG. 1A,** an intermediate node 197 in a network 191 routes encrypted packets received from a source end point device, a server 195, to a destination end point device, a personal computer 193. In addition to such routing, the intermediate node 197 decrypts such packets, performs payload content analysis, and, based on the results of such analysis and associated logic, may invoke a local or remote service. As illustrated with reference to the many figures herein, there are many embodiments of the present invention that carry out such functionality.

For example, in the embodiment illustrated in **FIG. 1B,** a source end point device 141 sends an encrypted file or encrypted packets toward a destination end point device 161 via the intermediate network node 107. The source end point device 141 and the destination end point device 161 may be a server, personal computer, notebook computer, handheld computer, phone, or any other user equipment that sends or receives encrypted packets or files, for security purposes. Further, the network node 107 is shown as one of the nodes in the Internet backbone 191 that participates in service module analysis and routing of encrypted files or packets. The network node 107 may be a packet switching exchange (PSE), router/switch, access point (AP) or Internet service provider equipment.

The intermediate network node 107 consists of a processing circuitry 109, communicatively coupled to it are encryption pipe 111 and decryption pipe 113. The encryption pipe 111 and decryption pipe 113 may be hardwired for speeding up the encryption and decryption of the received packets. Further, the network node 107 consists of a local storage 123 and a plurality of network interfaces 125. The local storage 123 further consists of encryption/decryption and/or encoding/decoding (ENC/DEC/ENCR/DECR) manager 115 that handles the encryption and decryption of the received packets. The routing rules 121 help route the packets toward destination end point device. Further, the encryption and decryption manager 115 may generate public key and private key pairs, if needed, such as public key 1 117 and private key 1 119.

The source end point device 141 consists of processing circuitry 143, with hardwired encryption pipe 145 and decryption pipe 147. Alternatively, the encryption pipe and decryption pipe may be implemented using software (not shown). A local storage 157 contained in the source end point device further consists encryption/decryption and/or encoding/decoding (ENC/DEC/ENCR/DECR) manager 149. The encryption and decryption manager 149 generates public key and private key pairs during encryption, such as public key 2 151 and private key 2 153 pair. Further, the source end point device contains network interfaces 155 that enable communication with external devices, network nodes and the destination end point device 161.

Similarly, the destination end point device 161 consists of processing circuitry 163, communicatively coupled with hardwired encryption pipe 165 and decryption pipe 167. Alternatively, the encryption pipe and decryption pipe may be implemented using software (not shown). The destination end point device further contains a local storage 177, which further contains encryption/decryption and/or encoding/decoding (ENC/DEC/ENCR/DECR) manager 169. The encryption and decryption manager 169 generates public key and private key pairs during encryption, such as public key 3 171 and private key 3 173 pair, and sends the public key 3 171 to the destination device while requesting for a download of encrypted packets or a file.

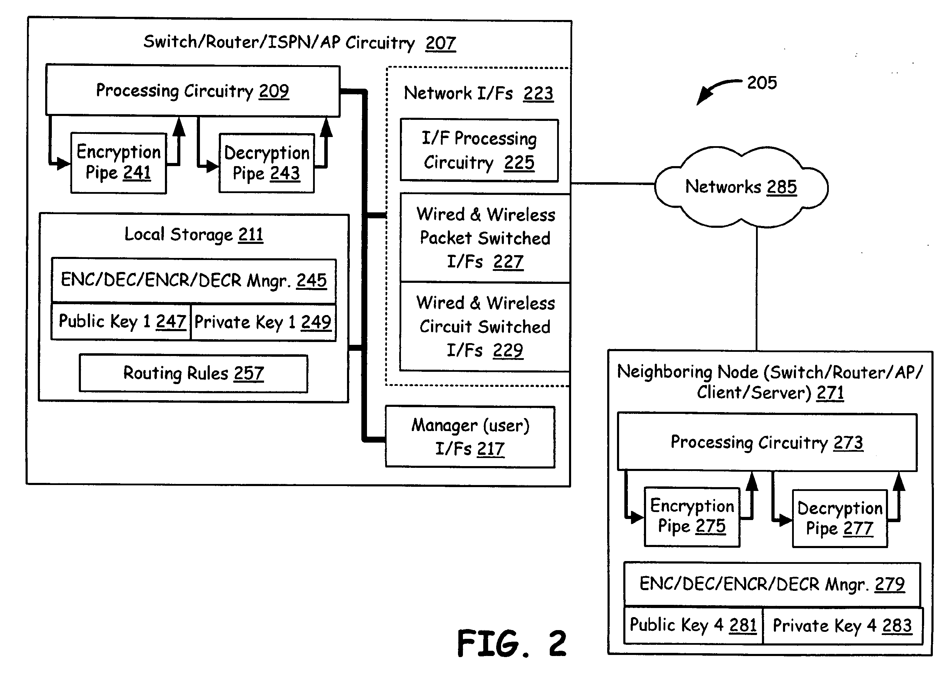

Although, the generating of public and private key pairs and exchange of public keys occur from both sides (that is, between source and destination end point devices), in the following descriptions, the generation of key pairs and sending of public key from the destination end point device is used. Detailed descriptions of routers, packet switching exchanges (PSE), servers/clients, access points, in accordance with the present invention, are provided with reference to the circuitry diagrams of **FIG. 2, 3, 4** and **5,** respectively.

For example, the personal computer 193 (that is, the destination end point device 161) may request for a file to download from the server 195 (that is, the source end point device 141) in a secured manner. Since the Internet or Intranet communication is unsecured, the download may occur using secure sockets layer (SSL) protocol or public key cryptography. The public key cryptography uses two keys, a public key that is used to encrypt the file to be downloaded and a private key that is used to decrypt the downloaded file. While the public key may be available from either the source end point device 141 or the destination end point device 161, the private key is known only to the destination end point device 161. The SSL protocol uses public key cryptography to generate a symmetric key and then uses the symmetric key to encrypt and decrypt. The descriptions here onwards use public key cryptography and a file download as examples, although with some alteration the present invention is applicable to any other encryption approaches.

These encrypted packets of the file to be downloaded flow through the Internet backbone 191, one of which may be the intermediate network node 107. When the intermediate network node 107 receives the first encrypted packet, the encryption/decryption manager 115 recognizes that the packet is encrypted and the packet analysis cannot be done unless the received packet is decrypted. Therefore, the encryption/decryption manager 115 requests the private key 3 171 from the destination end point device 161. The private key 3 171 may be received in a secured manner through yet another public key cryptography session or in any other secured manner. That is, by using public key cryptography, the encryption/decryption manager 115 sends its digital certificate and a public key and establishes a different session with the destination end point device 161. Thus, the encryption/decryption manager 115 receives the private key in a secured manner and decrypts the first encrypted packed. The encryption/decryption manager 115 utilizes the decryption pipe 113 and quickly decrypts the first encrypted packet. Once decryption is completed, the encryption/decryption manager discards the private key. Alternatively, instead of discarding the private key after each packet is decrypted, the encryption/decryption manager 115 may safe keep the private key until all of the encrypted packets in a session between the source and the destination end point devices in completed and then discard the private key.

Once decrypted, the packet is analyzed and service modules are applied. During the analysis of the packets, Service Module Managers (SMMs - not shown) compare the first decrypted packet contents with the trigger templates and if a full or partial match occurs, execute the trigger logic associated with the match. The trigger templates may include header templates, payload templates and supplemental templates. Then, the SMMs apply one or more SM processing as indicated in the trigger logic. Choice of a particular SM processing for a given packet depends on the trigger logic and indications in the template. The SMMs may also apply Service module (SM) processing on a packet, in any of the devices containing SMMs and SMs, if independent request is indicated in the packet. If the SMs indicated in the trigger logic is not available within the device, external SMs may be employed by interrupting the packet routing and sending a copy of the first encrypted packet to another device/node, which may contain the required SM. Thus, in the entire process of analysis and application of service modules, the secrecy of the payload contents is maintained.

The encryption/decryption manager 115 then encrypts the processed first decrypted packet using the encryption pipe 111. For this, the encryption/decryption manager 115 establishes another secured session with the destination end point device 161 and receives a new public key. The destination end point device 161 generates a new key pair for this reason and sends the public key to the intermediate network node 107. Alternatively, the encryption/decryption manager 115 may request the source end point device 141 for the public key with which the first encrypted packet is encrypted. In this case, the encryption/decryption manager 115 recreates the first encrypted packet. Once encrypted, the packet is forwarded to the switches (not shown) for routing the packet towards the destination end point device 161. The encryption/decryption manager 115 may also tag the re-encrypted packet so that the packets are forwarded to the destination end point device 161 without any further delay. By tagging, the rest of the nodes that participate in transmission of the packet recognize that the packet has already been processed.

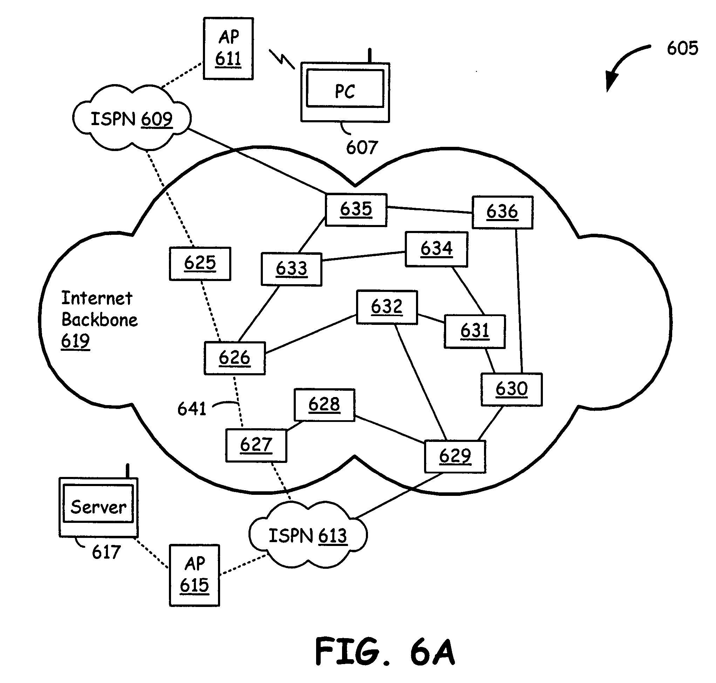

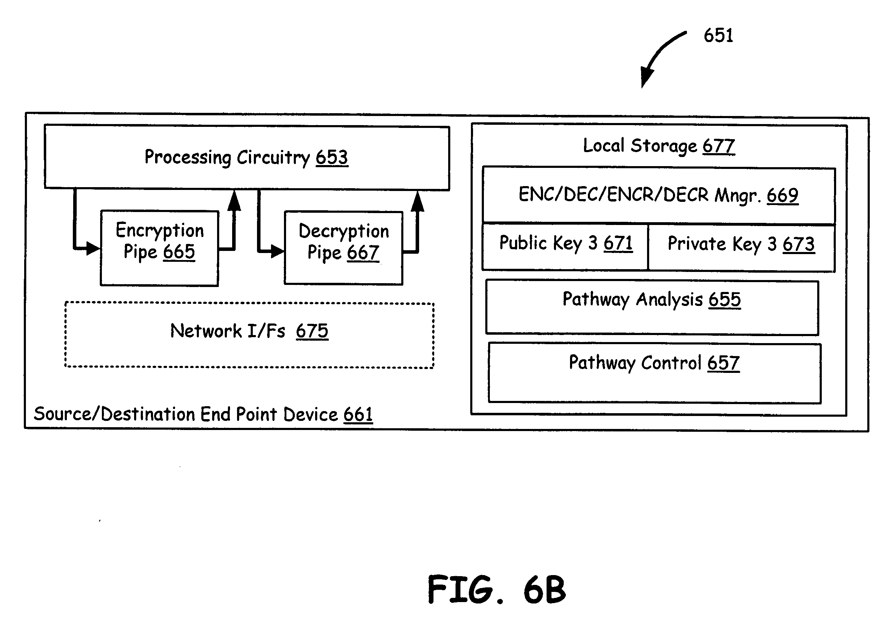

In another embodiment, the source end point device 141 may encrypt the entire file to be downloaded before segmenting it into packets. In this case, the intermediate network node 107 may not be able to analyze and apply service modules to the packets. According to the present invention, the intermediate network node 107 gathers and caches the received encrypted and packetized file until the last packet is arrived, analyze and apply service modules to the entire file and then re-encrypt, packetize and transmit to the destination end point device 161. Related embodiments are described with reference to the **FIGs. 6, 7** and **8.**

Also, in the illustrations of **FIG. 1A** and **1B,** as an example of the present invention, the source and destination end point devices are respectively shown as a server and a personal computer. However, these end point devices are not limited to servers and personal computers alone and may be any other type of devices including, but not limited to, two servers or two client devices. Likewise, the direction of flow between the end-point devices can be reversed or occur in both directions. Many variations are possible.

**FIG. 2** is a schematic block diagram 205 illustrating a network node (switch/router/ISPN/AP) constructed in accordance with the embodiment of **FIG. 1A** of the present invention. The network node circuitry 207 may be any of the Internet node circuitry that route data packets and the circuitry may in part or full be incorporated in any of the network devices such as a switch, a router, the ISPN, or an access point. The network node circuitry 207 generally includes processing circuitry 209, local storage 211, manager interfaces 217 and network interfaces 223. These components communicatively coupled to one another via one or more of a system bus, dedicated communication pathways, or other direct or indirect communication pathways. The processing circuitry 209 may be, in various embodiments, a microprocessor, a digital signal processor, a state machine, an application specific integrated circuit, a field programming gate array, or other processing circuitry. The processing circuitry 209 is communicatively coupled to an encryption pipe 241 and a decryption pipe 243. The encryption pipe 241 and decryption pipe 243 may be hardwired to increase the speed of encryption and decryption processes.

Local storage 211 may be random access memory, read-only memory, flash memory, a disk drive, an optical drive, or another type of memory that is operable to store computer instructions and data. The local storage 211 includes encryption/decryption and/or encoding/decoding (ENC/DECBNCR/DECR) manager 245 and, a public and private key pair registry such as public key 1 247 and private key 1 249. The local storage 211 also contains routing rules 257, which regulate the flow of the packets.

Further, the network interfaces 223 contain wired and wireless packet switched interfaces 227, wired and wireless circuit switched interfaces 229 and further the network interfaces 223 may also contain built-in or an independent interface processing circuitry 225. The network interfaces 223 allow network devices to communicate with other network devices and allow processing circuitry 209 to receive and send encrypted packets as well as to obtain keys to decrypt the packets for analysis. Further, the network interfaces 223 allow utilization external service modules (SMs) for analysis and processing, when such SMs are not available in the local storage. The manager interfaces 217 may include a display and keypad interfaces. These manager interfaces allow the user at the network exchanges to control aspects of the present invention such as characteristics of the encryption/decryption manager 245.

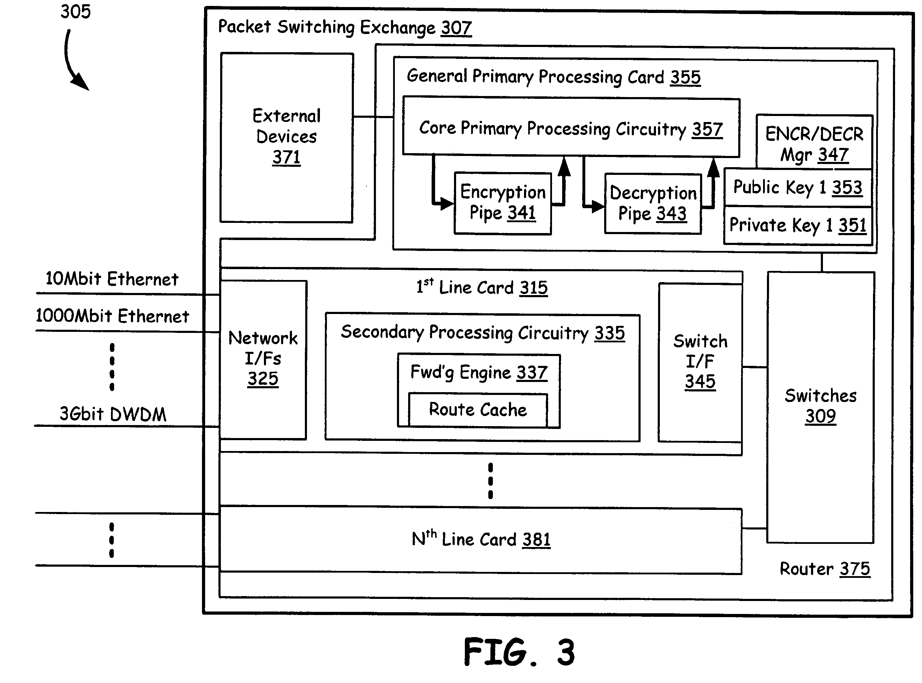

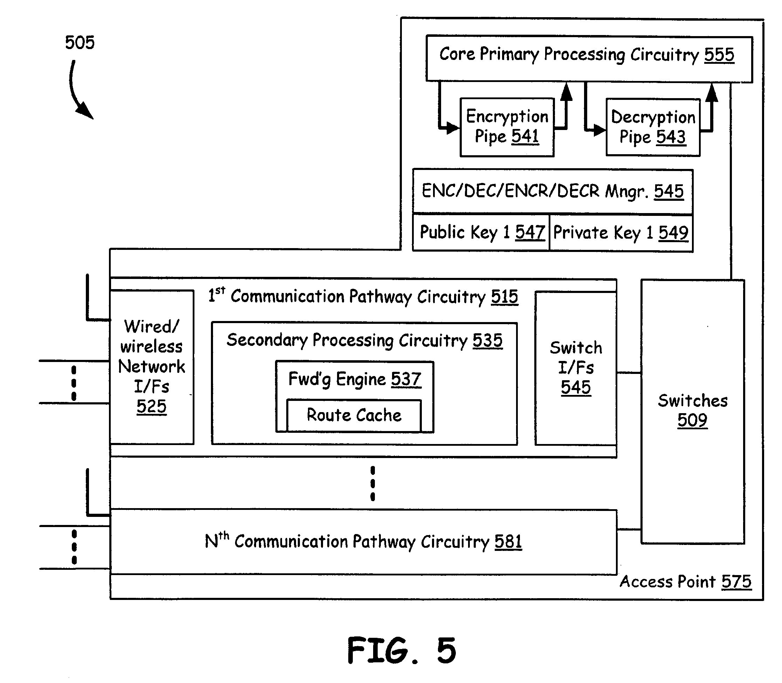

In other embodiments, the network node 207 of the present invention may include fewer or more components than are illustrated as well as lesser or further functionality. In other words, the illustrated network device is meant merely to offer one example of possible functionality and construction in accordance with the present invention. Other possible embodiments of network nodes are described with reference to the FIGs. 3 and 5, in terms of PSE and AP respectively.

The network device 207 is communicatively coupled to external network devices, such as device 271, via networks 285. The external network device 271 may also consist of elements of present invention such as external processing circuitry 273, external storage (not specifically shown) that contains an external encryption/decryption manager 279, and a public and private key pair registry such as public key 4 281 and private key 4 283. Further, the external processing circuitry 273 may have hardwired components of the present invention such as an encryption pipe 275 and a decryption pipe 277.

FIG. 3 is a schematic block diagram 305 illustrating a packet switching exchange constructed in accordance with the embodiment of FIG. 1A of the present invention. The Packet Switching Exchange (PSE) circuitry 307 may refer to any of the network nodes present in the Internet backbone 191 described with reference to the FIG. 1A. The PSE circuitry 307 generally includes a router 375 comprising general primary processing card 355, switches 309 and plurality line cards 315 and 381. Further, the PSE 307 may also contain external devices 371, such as storage units or user interfaces (not shown). The line cards 315 and 381 may all be different in certain cases.

The first line card 315 consists of network interfaces 325 capable of interfacing with wired and wireless networks such as 10Mbit, 1000Mbit Ethernet networks and 3Gbit DWDM (Dense Wavelength Division Multiplexing) fiber optic networks. The first line card 315 also contains switch interfaces 345 that allow the card to interface with interconnecting switches 309. Further, the first line card 315 consists of secondary processing circuitry 335, which preprocesses the packets before interconnecting switches 309 route the packets. The secondary processing circuitry 335 contains forwarding engine 337 and route cache.

The general primary processing card 355 further consists of core primary processing circuitry 357, which is communicatively coupled to an encryption pipe 341 and a decryption pipe 343. The encryption pipe 341 and decryption pipe 343 may be hardwired to increase the speed of encryption and decryption processes. The general primary processing card 355 also contains encryption/decryption and/or encoding/decoding (ENC/DEC/ENCR/DECR) manager 347 and, a public and private key pair registry such as public key 1 353 and private key 1 351.

When a packet arrives at the PSE for routing, via network interfaces, the secondary processing circuitry 335 determines whether the packet is encrypted. If encrypted, and if packet analysis is indicated, then the encrypted packet is forwarded to the general primary processing card 355. Then, the encryption/decryption manager 347 decrypts the packet by obtaining the private key and forwards the packet to the respective general primary processing card 355 components for further analysis and processing. Once analyzed and service modules are applied, if indicated for further routing, the packets are again encrypted by obtaining the public key, tagged, and routed toward the destination end point device.

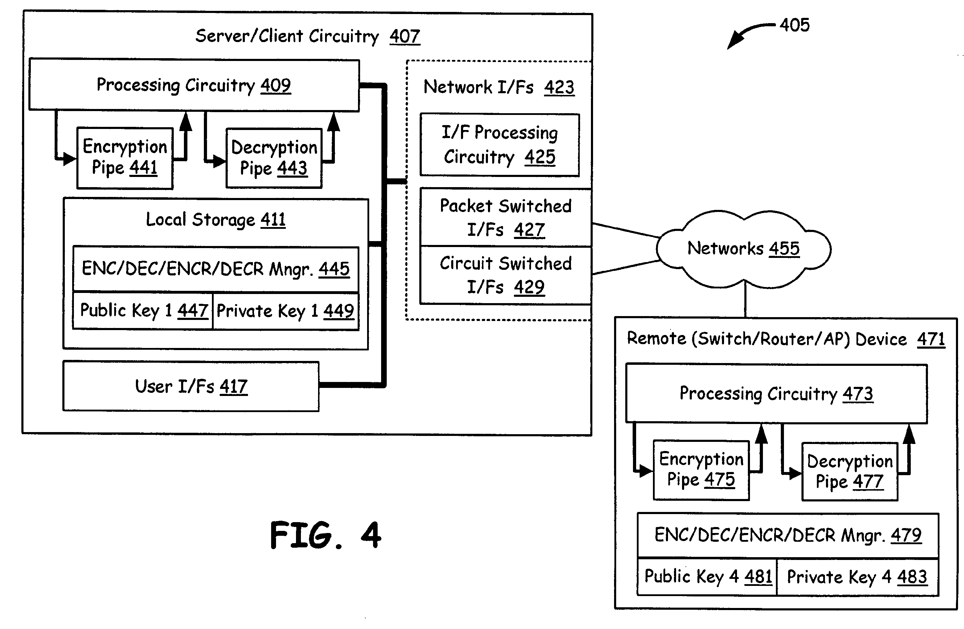

FIG. 4 is a schematic block diagram 405 illustrating end point devices (servers and/or clients) constructed in accordance with the embodiment of FIG. 1A of the present invention. The server/client circuitry 407 may refer to any of the device circuitry from which encrypted packets originate and/or terminate, and the circuitry may in part or full be incorporated in any of the end point devices described with reference to the FIG. 1A and FIG. **1B.** The server/client circuitry 407 generally includes processing circuitry 409, local storage 411, user interfaces 417 and network interfaces 423. These components communicatively couple to one another via one or more of a system bus, dedicated communication pathways, or other direct or indirect communication pathways. The processing circuitry 409 may be, in various embodiments, a microprocessor, a digital signal processor, a state machine, an application specific integrated circuit, a field programming gate array, or other processing circuitry. A hardwired encryption pipe 441 and a hardwired decryption pipe 443 are communicatively coupled to the processing circuitry 409, although in case of servers and clients such as personal computers, these components may be implemented through software.

Local storage 411 may be random access memory, read-only memory, flash memory, a disk drive, an optical drive, or another type of memory that is operable to store computer instructions and data. The local storage 411 includes encryption/decryption manager 445 described in this invention, though it may only exist in a simplified form. Further, the local storage 411 may include a registry of keys or may generate keys when needed for encryption, such as public key 1 447 and private key 1 449.

Further, the network interfaces 423 may contain wired and wireless packet switched interfaces 427, wired and wireless circuit switched interfaces 429 and the network interfaces 423 may also contain built-in or an independent interface processing circuitry 425. The network interfaces 423 allow end point devices to communicate with other end point devices. The user interfaces 417 may include a display and keypad interfaces.

In other embodiments, the network device 407 of the present invention may include fewer or more components than are illustrated as well as lesser or further functionality, and may adapt to the data packets exchange functionality rather than voice packets exchange. In other words, the illustrated end point device is meant merely to offer one example of possible functionality and construction in accordance with the present invention.

The end point device 407 is communicatively coupled to external network devices, such as device 471, via networks 455. The external network device 471 may also consist of elements of present invention such as encryption pipe 475, decryption pipe 477, encryption/decryption manager 479 and a registry of keys. The registry of keys may include public and private keys such as public key 4 481 and private key 4 483.

The server or client devices typically communicate with each other, when security is essential, by sending and receiving encrypted packets. These packets are decrypted using keys at the end point. When a network node, such as remote device 471, requests for a public or private key, for packet analysis, the encryption/decryption manager 445 verifies the authenticity of the remote device 471 by confirming the digital certificate sent by the device 471. Once confirmed, the encryption/decryption manager 445 sends the requested key using a secured session.

**FIG. 5** is a schematic block diagram 505 illustrating an access point 575 constructed in accordance with the embodiment of FIG. 1A of the present invention. The access point circuitry 575 may refer to any of the nodes in Internet backbone 191 described with reference to the FIG. 1. The AP circuitry 575 generally includes a plurality of communication pathway circuitries 515, 581, core primary processing circuitry 555 and switches 509. The communication pathway circuitries 515 to 581 may all be different in certain cases. The first communication pathway circuitry 515 consists of wired and/or wireless network interfaces 525 capable of interfacing with wired and wireless networks, switch interfaces 545 that allow the card to interface with interconnecting switches 509 and secondary processing circuitry 535. The secondary processing circuitry 535 preprocesses the packets before interconnecting switches 509 route the packets.

The core primary processing circuitry 555 is communicatively coupled to encryption pipe 541 and decryption pipe 543, which may be hardwired to quickly encrypt and decrypt packets. Further, the access point circuitry 575 consists of encryption/decryption manager 545 and a registry of keys such as public key 1 547 and private key 1 549. The access point circuitry 575 functions in a way similar to that of packet switching exchange 307 that was described with reference to the **FIG. 3** but may contain simpler components.

**FIG. 6A** is a schematic diagram 605 illustrating an embodiment of the present invention in which an encrypted file is packetized and transmitted across the Internet backbone, where network nodes support packet analysis of the encrypted file. The Internet backbone 619 may contain a plurality of network nodes such as nodes 625 through 636, which are all communicatively coupled. Further, source end point device (server) 617 and destination end point device (personal computer) 607 communicate via Access Point (AP) 615, Internet Service Provider's Network (ISPN) 613 and the network nodes 627, 626, and 625, Intemet Service Provider's Network (ISPN) 609 and Access Point 611, that is, the path 641 along the dashed lines in the illustration.

The source end point device 617 may encrypt the entire file to be downloaded before segmenting it into packets. In this case, the network nodes 627, 626 or 625 may not be able to analyze and apply service modules to the packets. In accordance with the present invention, one of the network nodes 627, 626 or 625 (possibly the first node 627 along the path 641) gathers and caches the received encrypted and packetized file until the last packet is arrived. Then the network node 627 analyzes and applies service modules to the entire file and then re-encrypts, packetizes and transmits to the destination end point device 607. To see that all of the packets of the encrypted file to be downloaded originating from the source end point device 617 pass through the path 641, the source end point device controls the communication path.

**FIG. 6B** is a schematic block diagram 651 illustrating source/destination end point devices (servers and/or clients) 661 constructed in accordance with the embodiment of **FIG. 6A** of the present invention. In the embodiment described in the **FIG. 6A** of the present invention, either the source end point device 617 or destination end point device 607 controls the path such that all of the packets of an encrypted file pass through the same communication path. The source/destination end point device circuitry 661 generally includes processing circuitry 653, local storage 677, user interfaces (not shown) and network interfaces 675. These components communicatively coupled to one another via one or more of a system bus, dedicated communication pathways, or other direct or indirect communication pathways. The processing circuitry 653 may be, in various embodiments, a microprocessor, a digital signal processor, a state machine, an application specific integrated circuit, a field programming gate array, or other processing circuitry. A hardwired encryption pipe 665 and a hardwired decryption pipe 667 are communicatively coupled to the processing circuitry 653, although in case of servers and clients such as personal computers, these components may be implemented through software. The network interfaces 675 may contain wired and wireless packet switched interfaces, wired and wireless circuit switched interfaces, and the network interfaces may also contain built-in or an independent interface processing circuitry. The network interfaces 675 allow end point devices to communicate with other end point devices.

Local storage 677 may be random access memory, read-only memory, flash memory, a disk drive, an optical drive, or another type of memory that is operable to store computer instructions and data. The local storage 677 includes encryption/decryption manager 669 described in this invention, though it may only exist in a simplified form. Further, the local storage 677 may include a registry of keys or may generate keys when needed for encryption, such as public key 3 671 and private key 3 673. Further, the storage includes pathway analysis 655 and pathway control 657 programs that help control the communication pathway as described in **FIG. 6A.**

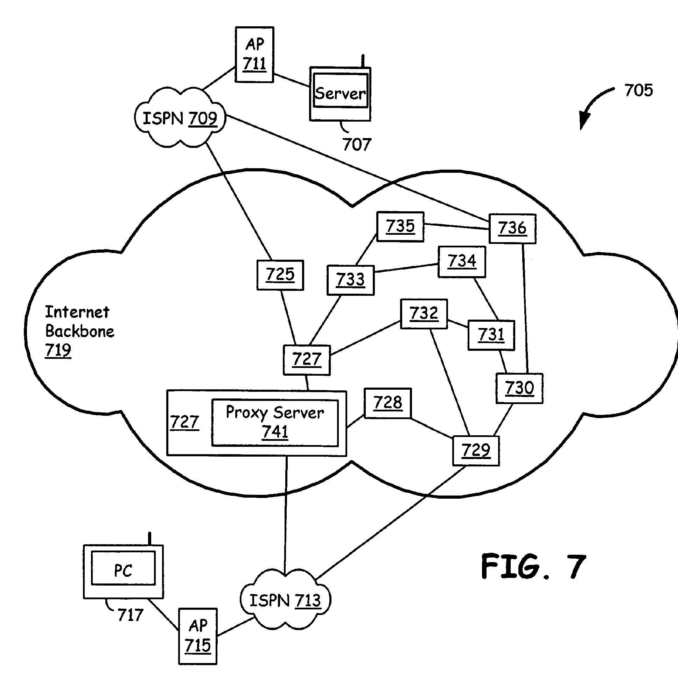

**FIG. 7** is a schematic diagram 705 illustrating another embodiment of the present invention in which a proxy server is built into the network node to support packet analysis of an encrypted file. The Internet backbone 719 may contain a plurality of network nodes such as nodes 725 through 736, which are all communicatively coupled. Further, source end point device (server) 707 and destination end point device (personal computer) 717 may communicate via Access Point (AP) 711, Internet Service Provider's Network (ISPN) 709 and the network nodes 725, 726, and 727, Internet Service Provider's Network (ISPN) 713 and Access Point 715. Alternatively, in this embodiment, the source end point device 707 and destination end point device 717 may communicate using any other nodes in the Internet backbone 719.

This embodiment of the present invention is an alternative to the one described with reference to the FIG. 6A, in which a destination end point device 717 requests a proxy server 741 built into one of the network nodes, that is the node 727, for download of an encrypted file from the source end point device 707. The proxy server 741 in turn requests the source end point device 707 and gathers all packets of the encrypted file and then decrypts, analyzes and processes the file. Once all of these processes are completed, the node 727 routes the packets toward the destination end point device 717.

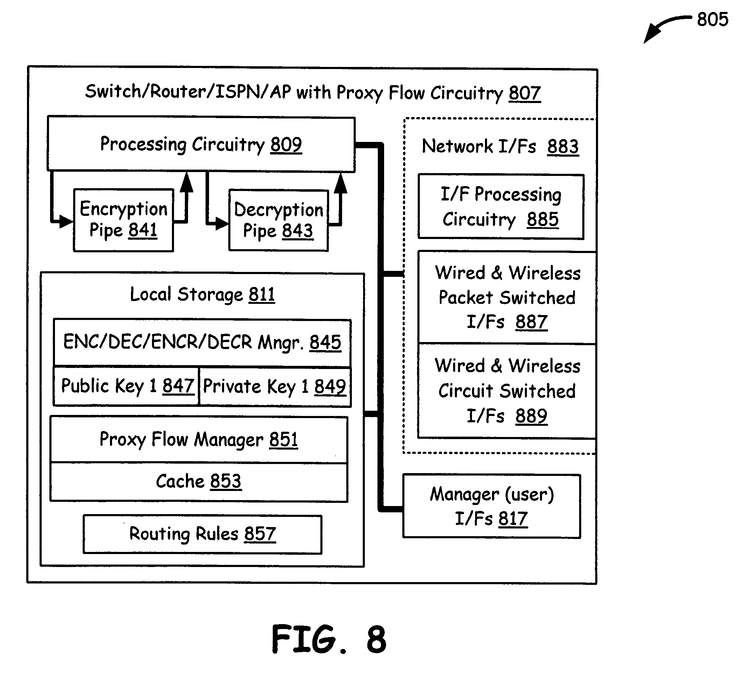

FIG. 8 is a schematic block diagram 805 illustrating a network node (switch/router/ISPN/AP) constructed in accordance with the embodiments of FIG. 6A and 7 of the present invention. The network node (switch/router/ISPN/AP) circuitry 807 contains additional circuitries than the ones described with reference to the FIG. 2, so that the network node circuitry 807 is capable of handling encrypted files that are trafficked via the node. The network node circuitry 807 may be any of the Internet node circuitry that route data packets and the circuitry may in part or full be incorporated in any of the network devices such as a switch, a router, an ISPN, or an access point. The network node circuitry 807 generally includes processing circuitry 809, local storage 811, manager interfaces 817 and network interfaces 883. These components communicatively coupled to one another via one or more of a system bus, dedicated communication pathways, or other direct or indirect communication pathways. The processing circuitry 809 may be, in various embodiments, a microprocessor, a digital signal processor, a state machine, an application specific integrated circuit, a field programming gate array, or other processing circuitry. The processing circuitry 809 is communicatively coupled to an encryption pipe 841 and a decryption pipe 843. The encryption pipe 841 and decryption pipe 843 may be hardwired to increase the speed of encryption and decryption processes.

Further, the network interfaces 883 contain wired and wireless packet switched interfaces 887, wired and wireless circuit switched interfaces 889 and further the network interfaces 883 may also contain built-in or an independent interface processing circuitry 885. The network interfaces 883 allow network devices to communicate with other network devices and allow processing circuitry 809 to receive and send encrypted packets as well as to obtain keys to decrypt the packets for analysis. Further, the network interfaces 883 allow utilization external service modules (SMs) for analysis and processing, when such SMs are not available in the local storage.

Local storage 811 may be random access memory, read-only memory, flash memory, a disk drive, an optical drive, or another type of memory that is operable to store computer instructions and data. The local storage 811 includes encryption/decryption and/or encoding/decoding (ENC/DEC/ENCR/DECR) manager 845 and, a public and private key pair registry such as public key 1 847 and private key 1 849. The local storage 811 also contains routing rules 857, which regulate the flow of the packets. The storage further includes a proxy flow manager 851 and a cache 853, to handle of encrypted, packetized files that arrive at the node. The proxy flow manager 851 in various embodiments may also perform the functions of a proxy server and request encrypted files on behalf of a destination end point device.

The manager interfaces 817 may include a display and keypad interfaces. These manager interfaces allow the user at the network exchanges to control aspects of the present invention such as characteristics of the encryption/decryption manager 845.

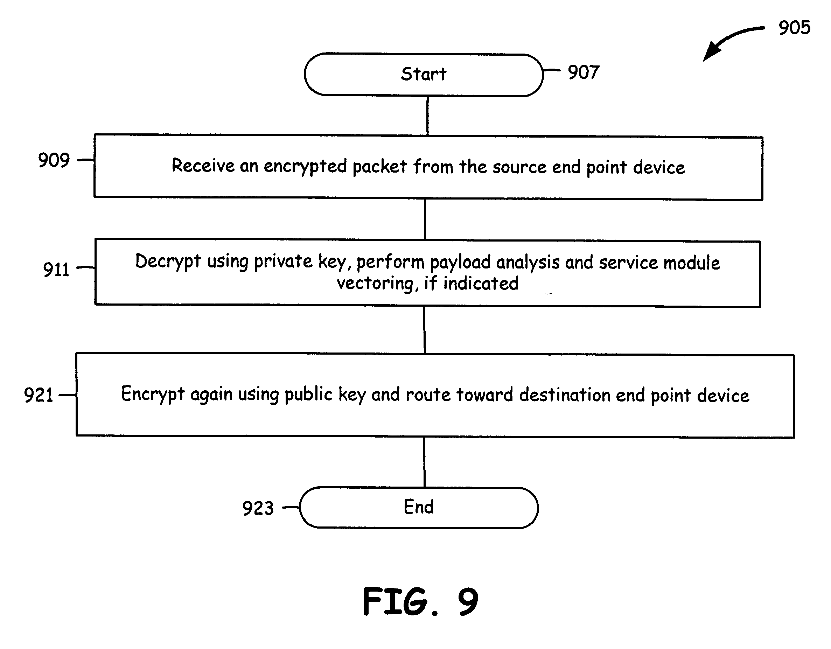

**FIG. 9** is a flowchart 905 illustrating general flow of functionality of network node of **FIGs. 1B, 2, 3, 4** and **5.** The functionality of network node begins at a block 907. At a next block 909, the network node receives an encrypted packet from the source end point device. At a next block 911, the network node decrypts the packet using the corresponding private key. For this, the network node establishes another secured session with the destination end point device and obtains the private key. Once decrypted, the network node performs payload analysis and service module vectoring, if indicated.

Then, at a next block 921, the network node encrypts the packet again. This may be done in one of the two ways. First way is to establish a new secured session with the destination end point device and encrypt the packet again. Second way is to obtain the public key from the source end point device and encrypt the packet using this public key. Then the method ends at an end block 923.

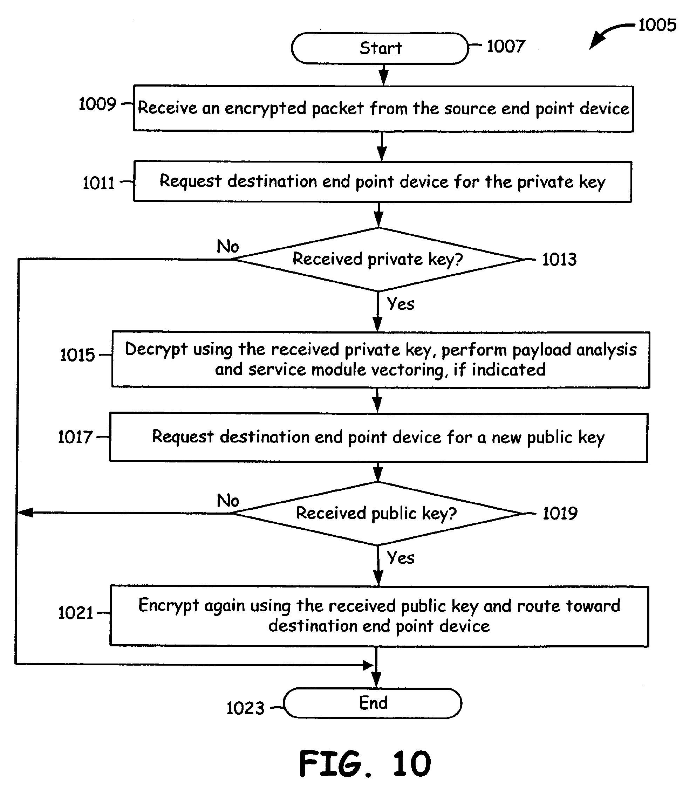

**FIG. 10** is a flowchart 1005 illustrating detailed flow of functionality of network node of **FIGs. 1B, 2, 3, 4** and **5.** The method starts at a start block 1007. Then, at next block 1009, the network node receives an encrypted packet from a source end point device. The source end point device may be a server trying to send a downloadable file to a client in a secured manner. At a next block 1011, the network node requests the client (or destination end point device) for corresponding private key.

For pathway analysis and service module vectoring, the networks node needs to decrypt the packet and perform payload analysis. Typically, the source and destination end point device, to communicate in a secured manner, establish a secured communication session. This begins by the destination end point device generating a pair of keys, that is, a public key and a private key, and sending public key to the source end point device for encryption. Only the corresponding private key allows decryption of the encrypted packet. The network node obtains this private key in a secured manner by establishing another secured session.

Then, at a next decision block 1013, the network node verifies if the private key is received. If not, the process ends at an end block 1023, and the encrypted packet may be routed toward destination end point device without payload analysis or may be discarded, if indicated. If yes, the received private key is used to decrypt the encrypted packet, at a next block 1015. Then, packet payload analysis is performed and service modules are applied, if indicated. Once decrypted, the private key may be discarded for security, or may be kept with the network node for a predetermined period for quick decryption subsequent encrypted packets of the download file that might arrive after the current encrypted packet.

Then, at a next block 1017, the network node requests the destination end point device for a new public key. Alternatively, the public key used in the previous encryption may also be used, by requesting for that key from either source or destination end point devices. Then, at a next decision block 1019, the network node verifies if the new public key is received from the destination end point device. If not, the process ends at an end block 1023, and the decrypted packet may be discarded, for security. If yes, the received public key is used to encrypt the decrypted packet, at a next block 1021. Once encrypted, the packet may be tagged to indicate to the subsequent network nodes that the packet is service module processed, and routed toward destination end point device. The method ends at a next block 1023.

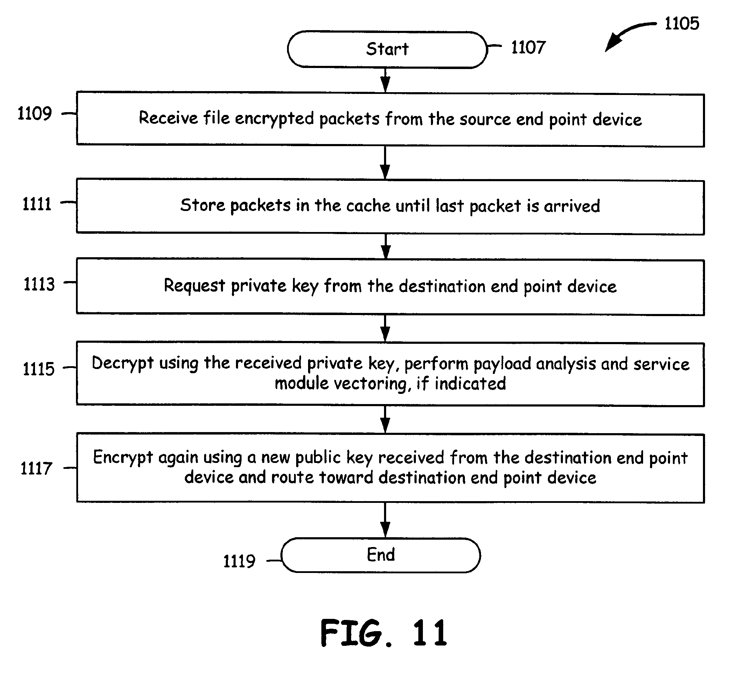

**FIG. 11** is a flowchart 1105 illustrating general flow of functionality of network node of **FIG. 8**. The method starts at a start block 1107. Then, at a next block 1109, the network node receives file-encrypted packets from the source end point device, one by one. At a next block 1111, the network node stores them all in a cache until the last packet is arrived.

At a next block 1113, the network node receives private key from the destination end point device, by requesting for the corresponding private key. Then, at a next block 1115, the network node assembles all of the packets in the cache back into the file, decrypts the entire file and performs analysis on the file. At a next block 1117, the network node encrypts the file again using a new public key and packetizes it and routes toward destination end point device. The method ends at a next block 1119.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. A packet switching exchange in an Internet infrastructure that participates in a communication pathway, the communication pathway supporting delivery of a first encrypted packet from a source end point device toward a destination end point device, the packet switching exchange comprising:
processing circuitry comprising a decryption pipe and an encryption pipe;
a plurality of network interfaces communicatively coupled to the processing circuitry;
a first of the plurality of network interfaces, upon receipt of the first encrypted packet from the source end point device, delivers the first encrypted packet to the processing circuitry;
the processing circuitry decrypts the first encrypted packet using the decryption pipe to generate a first decrypted packet;
the processing circuitry compares the first decrypted packet with at least one trigger template;
the processing circuitry encrypts the first decrypted packet using the encryption pipe circuitry to generate a second encrypted packet; and
the processing circuitry delivers the second encrypted packet toward the destination end point device via a second of the plurality of network interfaces.

2. The packet switching exchange of claim 1, wherein the packet switching exchange comprising a router.

3. The packet switching exchange of claim 1, wherein the packet switching exchange comprising an access point.

4. The packet switching exchange of claim 1, wherein the decryption pipe uses a first key.

5. The packet switching exchange of claim 4, wherein encryption pipe uses a second key.

6. A communication infrastructure comprising:
an intermediate network node;
a destination device communicatively coupled to the intermediate network node;
a source device, communicatively coupled to the intermediate node, that employs a first public key to generate a first packet having a first encrypted payload, and the first packet contains a network address of the destination device;
the intermediate network node receives the first packet and uses a first private key to generate a first decrypted payload from the first encrypted payload;
the intermediate network node performs a processing function on the first decrypted payload;
the intermediate network node employs a second public key to generate a second packet having a second encrypted payload; and
the destination device receives the second packet and uses a second private key to generate a second decrypted payload from the second encrypted payload.

7. The communication infrastructure of claim 6, wherein the destination device communicates the first public key to the source device.

8. The communication infrastructure of claim 6, wherein the intermediate network node communicates the first public key to the source device.

9. A network node in an Internet infrastructure that receives a first plurality of packets representing at least a portion of a first encrypted file from a source end point device, destined to a destination end point device, the network node comprising:
interface circuitry that receives the plurality of packets;
storage;
processing circuitry, communicatively coupled to the interface circuitry, that directs the first plurality of packets received via the interface circuitry to the storage;
the processing circuitry reconstructs the at least a portion of the first encrypted file from the first plurality of packets, and decrypts the at least a portion of the first encrypted file to generate a decrypted sequence;
the processing circuitry processes the decrypted sequence by applying service functionality; and
the processing circuitry encrypts the decrypted sequence to create an encrypted sequence; and
the processing circuitry constructs a second plurality of packets from the encrypted sequence, and forwards the second plurality of packets toward the destination end point device.

10. A method performed by a packet switching exchange in a packet switched communication pathway, the method comprising:
receiving a first packet with a first encrypted payload from a source end point device;
performing decryption processing on the first encrypted payload using a private key to generate a first decrypted payload;
performing an analysis of the first decrypted payload;
perform encryption processing on the first decrypted payload using a public key to generate a second encrypted payload;
constructing a second packet with the second encrypted payload; and
transmitting the second packet toward the destination end point device.
